# EUROPEAN PATENT SPECIFICATION

(11) **EP 3 965 435 B1**
(45) Date of publication and mention of the grant of the patent: **11.11.2026**
(21) Application number: 20865954.0
(22) Date of filing: 14.05.2020
(51) Int. Cl.: H04R 9/06, H04R 1/34

(54) **MOBILE TERMINAL AND SOUND OUTPUT CONTROL METHOD THEREOF**
MOBILES ENDGERÄT UND TONAUSGABESTEUERUNGSVERFAHREN DAFÜR
TERMINAL MOBILE ET SON PROCÉDÉ DE COMMANDE DE SORTIE SONORE

(30) Priority: 19.09.2019 CN 201910889747
(43) Date of publication of application: 09.03.2022
(73) Proprietor: ZTE Corporation, Shenzhen, Guangdong 518057 (CN)
(72) Inventor: CUI, Tengfei, Shenzhen, Guangdong 518057 (CN); YU, Zhanwu, Shenzhen, Guangdong 518057 (CN)
(74) Representative: Casalonga
(86) International application number: PCT/CN2020/090228
(87) International publication number: WO 2021/051835

(56) References cited:
- EP-A1- 3 334 178
- EP-A1- 3 334 178
- CN-A- 106 162 467
- CN-A- 106 792 368
- CN-A- 109 246 294
- CN-A- 109 996 161
- US-A1- 2007 298 827
- US-A1- 2014 161 302
- US-A1- 2015 036 845
- US-A1- 2015 340 795

## Description

### Field of the Invention

The present invention relates to the technical field of communications, and in particular, to a mobile terminal and a sound output control method thereof.

### Background of the Invention

An existing mobile phone usually uses a speaker at the bottom of the mobile phone only in a scenario of playing music or videos in stereo. Since a left sound channel speaker and a right sound channel speaker have the same direction and are close to each other, the stereo-playing effect is poor and cannot meet the needs of the consumers for the stereo effect of the mobile phone.

The above contents are used only to assist in understanding the technical solution of the present invention, and do not mean to acknowledge that the above contents are existing technologies.

CN106162467A provides a sound pipe, a speaker assembly and a two-side-sounding mobile phone. The sound pipe comprises a sound pipe main body and a sound pipe control part, wherein a sound cavity is formed in the sound pipe main body; a first opening, a second opening and a third opening communicated with the sound cavity are formed in the outer surface of the sound pipe main body; the first opening is communicated with the sound outlet of the speaker, the second opening is communicated with the front speaker sound hole in electronic equipment, and the third opening is communicated with the side speaker sound hole in the electronic equipment; and the sound pipe control part moves on the sound pipe main body to close the second opening or the third opening.

US20070298827A1 provides a mobile radio terminal having a housing with a loud speaker opening and an ear speaker opening and a speaker selection member coupled to and movable relative to the housing. The speaker selection member has a first audio port and a second audio port spaced such that the loud speaker opening is exposed through the first audio port when the speaker selection member is in a first position and the ear speaker opening is exposed through the second audio port when the speaker selection member is in a second position. In a third position, the loud speaker opening may be exposed through the second port or through a third audio port in the housing.

### Summary of the Invention

The main objective of the present invention is to provide a mobile terminal and a sound output control method thereof, so as to solve the technical problem that existing mobile terminals have a poor stereo-playing effect.

In order to achieve the above objective, the present invention provides a mobile terminal, which is defined in claim 1 and claim 7.

Further advantageous embodiments of the present disclosure are indicated in the dependent claims.

It is to be understood that both the forgoing general description and the following detailed description are exemplary only, and are not restrictive of the present disclosure.

### Brief Description of the Drawings

In order to explain embodiments in the present invention or technical solutions in the existing technologies more clearly, accompanying drawings needed in the description of the embodiments or the existing technologies are described briefly below. Obviously, the accompanying drawings in the following description are only some embodiments of the present invention, and for those of ordinary skill in the art, other drawings may also be obtained based on structures illustrated in these accompanying drawings without making creative efforts.
Fig. 1 schematically shows a structure of a mobile terminal according to a first embodiment of the present invention;
Fig. 2 schematically shows a structure of a mobile terminal not according to the present invention;
Fig. 3 schematically shows a structure of a mobile terminal according to a third embodiment of the present invention;
Fig. 4 schematically shows a structure of a mobile terminal according to a fourth embodiment of the present invention;
Fig. 5 schematically shows a structure of a mobile terminal according to a fifth embodiment of the present invention;
Fig. 6 schematically shows another structure of the mobile terminal according to the fifth embodiment of the present invention;
Fig. 7 schematically shows a flowchart of a sound output control method of a mobile terminal according to a sixth embodiment of the present invention;
Fig. 8 schematically shows a structure of a mobile terminal according to a seventh embodiment of the present invention;
Fig. 9 schematically shows another structure of the mobile terminal according to the seventh embodiment of the present invention; and
Fig. 10 schematically shows a flowchart of a sound output control method of a mobile terminal according to an eighth embodiment of the present invention.

### List of reference numbers:

| Reference number | Name | Reference number | Name |
|---|---|---|---|
| 100 | Mobile terminal | 8 | First sound output channel |
| 1 | Housing | 9 | Second sound output channel |
| 2 | First sound output hole | 10 | Display surface |
| 3 | Second sound output hole | 11 | Top end surface |
| 4 | First sound output outlet | 12 | Bottom end surface |
| 5 | Second sound output outlet | 13 | Switch |
| 6 | Through-hole | 7 | Sound output channel |
| 14 | Rotatable component | 15 | Sound output channel switching device |
| 16 | Channel device | | |

Realization of the objective, functional characteristics, and advantages of the present invention will be further described in conjunction with embodiments with reference to the accompanying drawings.

### Detailed Description of the Embodiments

Technical solutions in embodiments of the present invention will be clearly and completely described with reference to the accompanying drawings in the embodiments of the present invention. Obviously, the embodiments described are only some embodiments, rather than all embodiments, of the present invention. All other embodiments obtained by those of ordinary skilled in the art based on the embodiments of the present invention without making creative efforts fall into the protection scope of the present invention.

It should be noted that, all directional indications (such as, upper, lower, left, right, front, back, ...) in the embodiments of the present invention are only used for explaining relative positional relationships and motions of respective components at a specific position (as shown in the accompanying drawings), and if the specific position changes, the directional indications also change correspondingly.

In addition, description involving "first", "second", and so on are only used for the purpose of description only, and should not be understood as indicating or suggesting relative importance or implicitly indicating the number of technical features referred to. Accordingly, a feature defined by "first" and "second" may indicate or suggest that at least one said feature is included. Besides, technical solutions of respective embodiments may combine with each other. However, the combination should be realizable by those of ordinary skill in the art, and when the combination of the technical solutions have a contradiction or cannot be realized, it should be considered that this combination of the technical solutions does not exist and does not fall into the protection scope of the present invention either.

The present invention provides a mobile terminal 100.

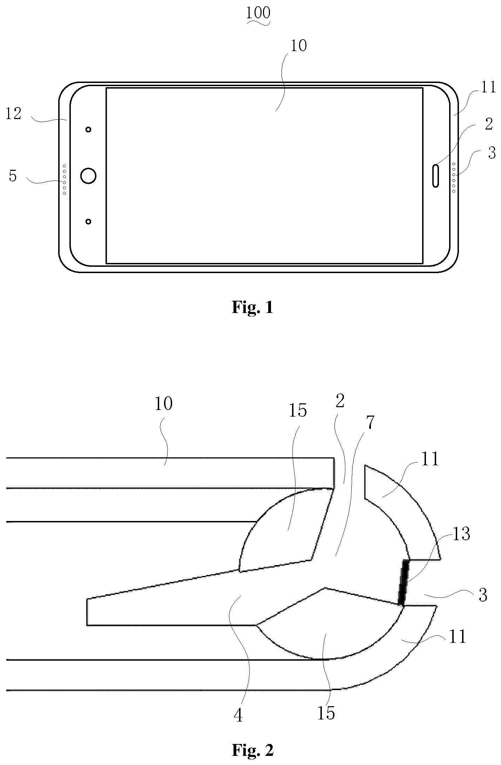

In a first embodiment of the present invention, please refer to Figs. 1 to 8, the mobile terminal 100 includes: a housing 1, a first side surface of the housing is provided with a first sound output hole 2, a second side surface of the housing is provided with a second sound output hole 3; a first speaker provided in the housing 1 and including a first sound output outlet 4; a sound output channel switching device 15, a sound output channel is formed in the sound output channel switching device 15, the first sound output outlet 4 is connected to the first sound output hole 2 or the second sound output hole 3 through the sound output channel; and a second speaker provided in the housing 1 and including a second sound output outlet 5, a direction of the second sound output outlet 5 is opposite to a direction of the first sound output hole 2 or the second sound output hole 3.

In the present invention, the mobile terminal specifically may be a mobile phone, a tablet computer, a smart watch, and so on. In the present embodiment, the mobile terminal 100 being a mobile phone is taken as an example, and the mobile phone terminal 100 has a function of playing a sound loudly, and further has functions such as phoning. In an embodiment, the mobile terminal 100 includes a housing 1, a first speaker (not shown), a second speaker (not shown), and a sound output channel switching device 15. A body shape of the housing 1 may be cuboid or other polyhedrons, and no limitation is made herein. Exemplary description is made below by taking the body shape of the housing 1 being cuboid as an example. The first side surface and the second surface of the housing 1 are different side surfaces, and thus the first sound output hole 2 and the second sound output hole 3 are provided in different side surfaces of the housing 1.

The first sound output outlet 4 of the first speaker may be connected to the first sound output hole 2 or the second sound output hole 3 through the sound output channel of the sound output channel switching device 15, so as to realize outputting the sound from the first sound output hole 2 or the second sound output hole 3.

The second speaker outputs the sound directly through the second sound output outlet 5, and the direction of the second sound output outlet 5 of the second speaker is opposite to the direction of the first sound output hole 2 or the second sound output hole 3. In a scenario of playing the sound loudly, the second speaker can coordinate with the first speaker a left sound channel and a right sound channel to output a sound simultaneously, and thus relatively good stereo-playing effect can be achieved by using opposite sound-outputting directions and thus acoustic experience of a user is improved.

In an embodiment, when the direction of the second sound output outlet 5 is opposite to the direction of the second sound output hole 3 and the mobile terminal 100 is in the scenario of playing the sound loudly, the first speaker outputs the sound through the second sound output hole 3, and the second speaker outputs the sound through the second sound output outlet 5 simultaneously. The first speaker and the second speaker respectively serve as the left sound channel and the right sound channel, so as to achieve the stereo-playing effect and improve acoustic experience of the user. When the direction of the second sound output outlet 5 is opposite to the direction of the second sound output hole 3 and the mobile terminal 100 is in a scenario of listening to a private call or a private audio message, the sound is output only through a sound output hole which is convenient for listening by the user, so as to protect privacy of the user and prevent leaking of the sound through other sound output holes. In the present embodiment, specific limitation is not made on the sound output hole, and the sound output hole may be the first sound output hole 2, may be the second sound output hole 3, and may also be the second sound output outlet 5. When the direction of the second sound output outlet 5 is opposite to the direction of the first sound output hole 2 and the mobile terminal 100 is in the scenario of playing the sound loudly, the first speaker outputs the sound through the first sound output hole 2, and the second speaker outputs the sound through the second sound output outlet 5 simultaneously. The first speaker and the second speaker respectively serve as the left sound channel and the right sound channel, so as to achieve the stereo-playing effect and improve acoustic experience of the user. When the direction of the second sound output outlet 5 is opposite to the direction of the first sound output hole 2 and the mobile terminal 100 is in the scenario of listening to the private call or the private audio message, the sound is output only through the sound output hole which is convenient for listening by the user. In the present embodiment, specific limitation is not made on the sound output hole, and the sound output hole may be the first sound output hole 2, may be the second sound output hole 3, and may also be the second sound output outlet 5.

In an embodiment, the first side surface may be a display surface 10 of the mobile terminal 100. Accordingly, the first sound output hole 2 of the first speaker is provided on the display surface 10 of the mobile terminal 100, and the second side surface may be an adjacent side surface of the first surface and may also be a back surface of the mobile terminal 100. That is, a sound-outputting direction of the first sound output hole 2 and a sound-outputting direction of the second sound output hole 3 may be adjacent, and may also be opposite, and specific limitation is not made in the present embodiment.

It should be noted that, the sound output channel switching device 15 is also provided in the housing 1, and one or more sound output channels are formed inside the housing. The sound output channel is a channel for connecting the first sound output outlet 4 of the first speaker with the first sound output hole 2 or the second sound output hole 3 located at a side surface of the housing 1, and can realize switching between the first sound output hole 2 and the second sound output hole 3, so as to realize switching between a mode of listening to a call and a mode of playing the sound loudly.

In an embodiment, as shown in Fig. 1, the first side surface of the mobile terminal 100 is the display surface 10, and the second surface is a top end surface 11 of the mobile terminal 100. Accordingly, the first sound output hole 2 is provided on the display surface 10 of the mobile terminal 100, and the second sound output hole 3 is provided on the top end surface 11. When the direction of the second sound output outlet 5 is opposite to the direction of the second sound output hole 3, the second sound output outlet 5 is provided on a bottom end surface 12 of the mobile terminal 100; and when the direction of the second sound output outlet 5 is opposite to the direction of the first sound output hole 2, the second sound output outlet 5 is provided on the back surface of the mobile terminal 100.

In a second embodiment not according to the claimed invention, the first sound output hole and the second sound output hole share a switch. When the switch opens the first sound output hole, the switch closes the second sound output hole; and when the switch opens the second sound output hole, the switch closes the first sound output hole. Alternatively, the first sound output hole is provided with a first switch, and the second sound output hole is provided with a second switch. When the first switch opens the first sound output hole, the second switch closes the second sound output hole, or when the first switch closes the first sound output hole, the second switch opens the second sound output hole.

In the present embodiment, the first sound output hole 2 and the second sound output hole 3 share a sound output channel 7, but the first sound output hole 2 and the second sound output hole 3 are provided with a switch. The first sound output hole and the second sound output hole may be respectively provided with a switch, or as shown in Fig. 2 the first sound output hole and the second sound output hole may share a switch. The switch 13 may open the second sound output hole 3 when closing the first sound output hole 2, or may close the second sound output hole 3 when opening the first sound output hole 2. In order to improve the effect of listening to the private call or the effect of playing the sound loudly, the first sound output hole 2 and the second sound output hole 3 will not be open at the same time.

It will be appreciated that, the user usually listens to the call through the first sound output hole 2 provided on the display surface 10. Accordingly, when the private call or the private audio message is listened to, the switch closes the second sound output hole 3 and opens the first sound output hole 2, and the mobile terminal 100 outputs the sound through the first sound output hole 2. At this time, the second speaker and the second sound output hole 3 does not output the sound, so as to avoid that opening the first sound output hole 2 and the second sound output hole 3 at the same time brings undesired effects to the effect of listening to the private call or the effect of playing the sound loudly. In the case of playing the sound loudly, if the direction of the second sound output outlet 5 is opposite to the direction of the second sound output hole 3, the switch closes the first sound output hole 2 and opens the second sound output hole 3, and the mobile terminal 100 outputs the sound through both the second speaker and the second sound output hole 3, the second speaker and the second sound output hole 3 respectively serving as the left sound channel and the right sound channel, so as to achieve relatively good stereo-playing effect by using opposite sound-outputting directions. Alternatively, in the case of playing the sound loudly, if the direction of the second sound output outlet 5 is opposite to the direction of the first sound output hole 2, the switch closes the second sound output hole 3 and opens the first sound output hole 2, and the mobile terminal 100 outputs the sound through both the second speaker and the first sound output hole 2, the second speaker and the first sound output hole 2 respectively serving as the left sound channel and the right sound channel, so as to achieve relatively good stereo-playing effect by using opposite sound-outputting directions.

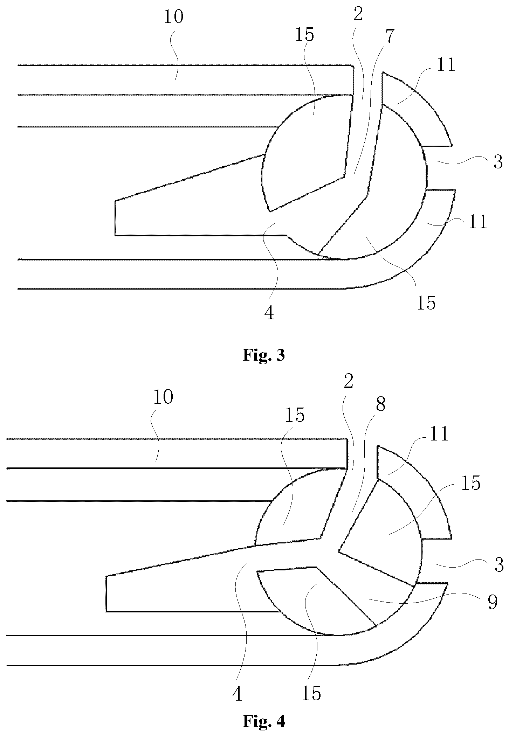

In a third embodiment, as shown in Fig. 3, the sound output channel switching device 15 is provided in the housing 1 and is rotatable relative to the housing 1, so as to enable the sound output channel to communicate the first sound output outlet 4 and the first sound output hole 2 or enable the sound output channel to communicate the first sound output outlet 4 and the second sound output hole 3.

In the present embodiment, the sound output channel switching device 15 is rotatable in the housing 1, and a sound output channel 7 is provided in the sound output channel switching device 15. In this way, when the private call or the private audio message is listened to, by rotating the sound output channel in the sound output channel switching device 15 to a position where the first sound output outlet 4 is connected to the first sound output hole 2 and meanwhile the first sound output outlet 4 is not connected to the second sound output hole 3, the mobile terminal 100 outputs the sound only through the first sound output outlet 4, and the second speaker and the second sound output hole 3 do not output the sound. In the case of playing the sound loudly, if the direction of the second sound output outlet 5 is opposite to the direction of the second sound output hole 3, by rotating the sound output channel 7 in the sound output channel switching device 15 to a position where the first sound output outlet 4 is connected to the second sound output hole 3 and meanwhile the first sound output outlet 4 is not connected to the first sound output hole 2, the mobile terminal 100 outputs the sound through both the second speaker and the second sound output hole 3, the second speaker and the second sound output hole 3 respectively serving as the left sound channel and the right sound channel, so as to achieve relatively good stereo-playing effect by using opposite sound-outputting directions. Alternatively, in the case of playing the sound loudly, if the direction of the second sound output outlet 5 is opposite to the direction of the first sound output hole 2, by rotating the sound output channel to a position where the first sound output outlet 4 is connected to the first sound output hole 2 and meanwhile the first sound output outlet 4 is not connected to the second sound output hole 3, the mobile terminal 100 outputs the sound through both the second speaker and the first sound output hole 2, the second speaker and the first sound output hole 2 respectively serving as the left sound channel and the right sound channel, so as to achieve relatively good stereo-playing effect by using opposite sound-outputting directions.

In an embodiment, a fourth embodiment is provided based on the fourth embodiment. As shown in Fig. 4, sound output channels include a first sound output channel 8 and a second sound output channel 9. When an exit of the first sound output channel 8 rotates to the first sound output hole 2, the first sound output hole 2 is connected to the first sound output channel 8, and the second sound output hole 3 is blocked from the second sound output channel 9. When an exit of the second sound output channel 9 rotates to the second sound output hole 3, the second sound output hole 3 is connected to the second sound output channel 9,and the first sound output hole 2 is blocked from the first sound output channel 8.

In the present embodiment, two sound output channels are provided in the sound output channel switching device 15. When the private call or the private audio message is listened to, the exit of the first sound output channel 8 rotates to the first sound output hole 2, the first sound output hole 2 is opened, and the second sound output hole 3 is closed, so that the mobile terminal 100 outputs the sound only through the first sound output hole 2. In the case of playing the sound loudly, if the direction of the second sound output outlet 5 is opposite to the direction of the second sound output hole 3, when the exit of the second sound output channel 9 rotates to the second sound output hole 3, the second sound output hole 3 is opened, and the first sound output hole 2 is closed, so that the mobile terminal 100 outputs the sound through both the second speaker and the second sound output hole 3, the second speaker and the second sound output hole 3 respectively serving as the left sound channel and the right sound channel, so as to achieve relatively good stereo-playing effect by using opposite sound-outputting directions. Alternatively, in the case of playing the sound loudly, if the direction of the second sound output outlet 5 is opposite to the direction of the first sound output hole 2, when the exit of the first sound output channel 8 rotates to the first sound output hole 2, the first sound output hole 2 is opened, and the second sound output hole 3 is closed, so that the mobile terminal 100 outputs the sound through both the second speaker and the first sound output hole 2, the second speaker and the first sound output hole 2 respectively serving as the left sound channel and the right sound channel, so as to achieve relatively good stereo-playing effect by using opposite sound-outputting directions.

In an embodiment, the first side surface of the mobile terminal 100 is the display surface 10, and the second side surface is the back surface of the mobile terminal 100. Accordingly, the first sound output hole 2 is provided on the display surface 10 of the mobile terminal 100, and the second sound output hole 3 is provided on a back surface of the display surface 10 of the mobile terminal 100. When the direction of the second sound output outlet 5 is opposite to the direction of the second sound output hole 3, the second sound output outlet 5 is provided on the display surface 10 of the mobile terminal 100; and when the direction of the second sound output outlet 5 is opposite to the direction of the first sound output hole 2, the second sound output outlet 5 is provided on the back surface of the display surface 10. The second speaker may be a general-purpose speaker, and may also be a screen sound output device. At this time, a sound-outputting direction is a direction that the display surface 10 faces.

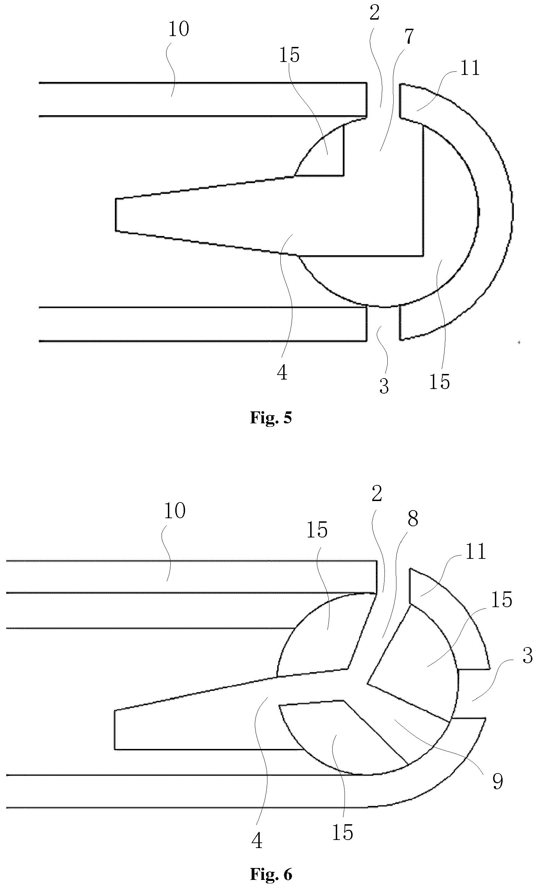

In an embodiment, in a fifth embodiment, as shown in Fig. 5, the sound output channel switching device 15 is provided in the housing 1, and is rotatable relative to the housing 1, so as to enable the sound output channel to communicate the first sound output outlet 4 and the first sound output hole 2 or enable the sound output channel to communicate the first sound output outlet 4 and the second sound output hole 3

In the present embodiment, the sound output channel switching device 15 is rotatable in the housing 1. A sound output channel 7 is provided in the sound output channel switching device 15. In this way, when the private call or the private audio message is listened to, by rotating the sound output channel 7 in the sound output channel switching device 15 to a position where the first sound output outlet 4 is connected to the first sound output hole 2 and meanwhile the first sound output outlet 4 is not connected to the second sound output hole 3, the mobile terminal 100 outputs the sound only through the first sound output outlet 4, and the second speaker and the second sound output hole 3 do not output the sound. In the case of playing the sound loudly, if the direction of the second sound output outlet 5 is opposite to the direction of the second sound output hole 3, by rotating the sound output channel 7 in the sound output channel switching device 15 to a position where the first sound output outlet 4 is connected to the second sound output hole 3 and meanwhile the first sound output outlet 4 is not connected to the first sound output hole 2, the mobile terminal 100 outputs the sound through both the second speaker and the second sound output hole 3, the second speaker and the second sound output hole 3 respectively serving as the left sound channel and the right sound channel, so as to achieve relatively good stereo-playing effect by using opposite sound-outputting directions. Alternatively, in the case of playing the sound loudly, if the direction of the second sound output outlet 5 is opposite to the direction of the first sound output hole 2, by rotating the sound output channel to a position where the first sound output outlet 4 is connected to the first sound output hole 2 and meanwhile the first sound output outlet 4 is not connected to the second sound output hole 3, the mobile terminal 100 outputs the sound through both the second speaker and the first sound output hole 2, the second speaker and the first sound output hole 2 respectively serving as the left sound channel and the right sound channel, so as to achieve relatively good stereo-playing effect by using opposite sound-outputting directions.

In an embodiment, as shown in Fig. 6, two sound output channels may be provided in the sound output channel switching device 15, i.e., a first sound output channel 8 and a second sound output channel 9. When an exit of the first sound output channel 8 rotates to the first sound output hole 2, the first sound output hole 2 is opened and the second sound output hole 3 is closed; and when an exit of the second sound output channel 9 rotates to the second sound output hole 3, the second sound output hole 3 is opened and the first sound output hole 2 is closed.

The present invention further provides a sound output control method of the mobile terminal.

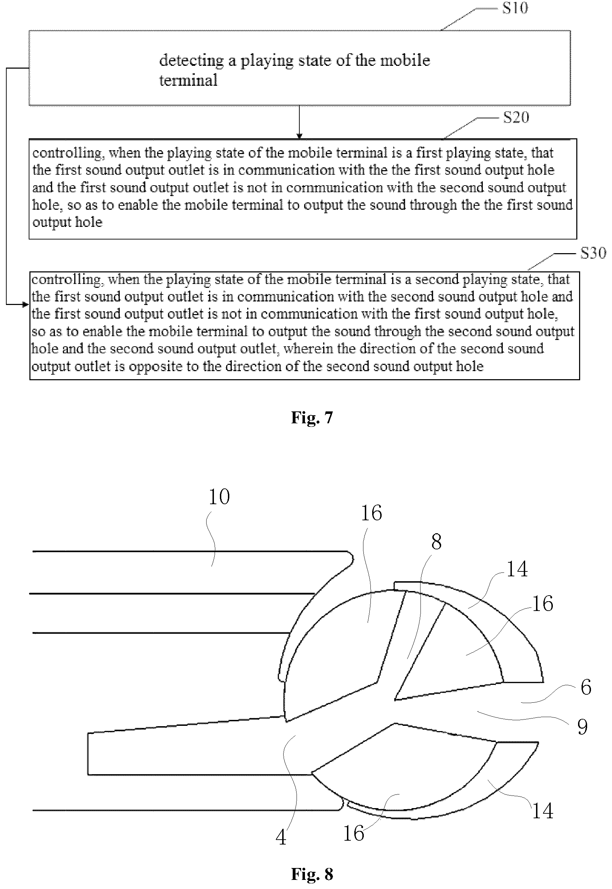

In a sixth embodiment of the present invention, as shown in Fig. 7, the method is applied to the mobile terminal described above. The sound output control method of the mobile terminal includes the following steps. At step S10, a playing state of the mobile terminal is detected. In the present embodiment, the playing state of the mobile terminal includes a first playing state and a second playing state. The first playing state is a playing scenario in which personal privacy needs to be protected set by an operation and maintenance personnel or a user according to needs, for example, listening to the private call, listening to the private audio message, and so on. The second playing state is a playing scenario in which the sound is played loudly set by an operation and maintenance personnel or a user according to needs, for example, playing a video without using an earphone, playing music without using the earphone, and so on. There are two ways to determine the playing state of the mobile terminal. A first way is that the mobile terminal automatically determines the playing state based on the current playing scenario. That is, when the mobile terminal detects the current playing scenario, the mobile terminal acquires the corresponding playing state based on the current playing scenario. The other way is that an operation and maintenance personnel or a user sends a playing state setting instruction to the mobile terminal according to needs, and the mobile terminal determines the playing state based on playing state infonnation carried by the instruction.

At step S20, when the playing state of the mobile terminal is the first playing state, it is controlled that the first sound output outlet is connected to the first sound output hole and the first sound output outlet is not connected to the second sound output hole, so as to enable the mobile terminal to output the sound through the first sound output hole. When the mobile terminal determines that the playing state is the first playing state, it is controlled that the first sound output outlet of the first speaker is connected to the first sound output hole and at this time the first sound output outlet is not connected to the second sound output hole. The mobile terminal outputs the sound through the first sound output outlet of the first speaker, and the sound is output from the first sound output hole. The second speaker does not output the sound.

At step S30, when the playing state of the mobile terminal is the second playing state, it is controlled that the first sound output outlet is connected to the second sound output hole and the first sound output outlet is not connected to the first sound output hole, so as to enable the mobile terminal to output the sound through the second sound output hole and the second sound output outlet. The direction of the second sound output outlet is opposite to the direction of the second sound output hole.

When the mobile terminal determines that the playing state is the second playing state, it is controlled that the first sound output outlet of the first speaker is connected to the second sound output hole through the sound output channel switching device and at this time the first sound output outlet is not connected to the first sound output hole. The mobile terminal outputs the sound through the first sound output outlet of the first speaker, and the sound is output from the second sound output hole. Moreover, the second speaker outputs the sound through the second sound output outlet, the direction of which is opposite to the second sound output hole. In this way, relatively good stereo-playing effect is achieved by using opposite sound-outputting directions, and acoustic experience of the user is improved.

The present invention further provides a mobile terminal 100.

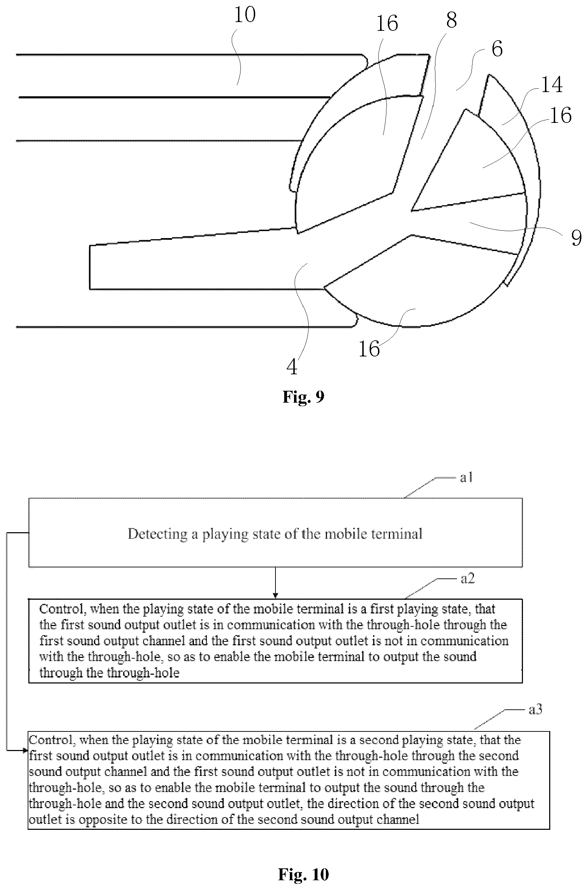

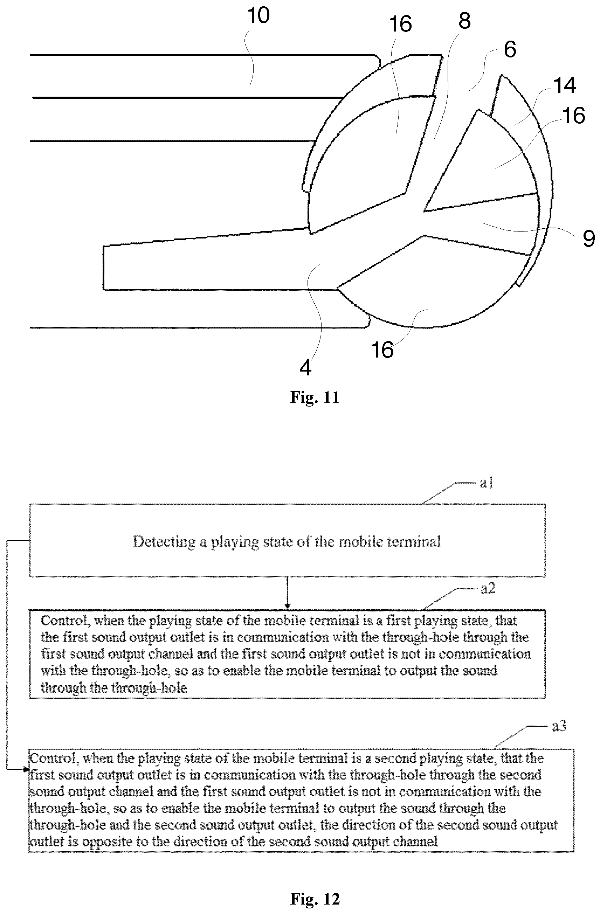

In a seventh embodiment of the present invention, as shown in Figs. 10 to 11, the mobile terminal includes: a housing 1, a first speaker, a channel device 16, and a second speaker. The housing includes a rotatable component 14 that is provided with a through-hole 6, and at least one side surface of the rotatable component 14 is an arc surface. The first speaker is provided in the housing 1, and the first speaker includes a first sound output outlet 4. The channel device 16 is provided in the rotatable component 14 and fits with the arc surface. A first sound output channel 8 and a second sound output channel 9 are provided in the channel device 16. an exit of the first sound output channel 8 faces a first side surface of the mobile terminal 100, and an exit of the second sound output channel 9 faces a second side surface of the mobile terminal 100. The first sound output outlet 4 is connected to the first sound output channel 8 and the second sound output channel 9 respectively. The rotatable component 14 is rotatable relative to the first sound output channel 8 and the second sound output channel 9. When the through-hole 6 of the rotatable component 14 rotates to the exit of the first sound output channel 8, the first sound output channel 8 is connected to the through-hole 6 and the second sound output channel 9 is blocked; and when the through-hole 6 of the rotatable component 14 rotates to the exit of the second sound output channel 9, the second sound output channel 9 is connected to the through-hole 6 and the first sound output channel 8 is blocked. The second speaker is provided in the housing 1 and includes a second sound output outlet. The direction of the second sound output outlet 5 is opposite to the direction of the first sound output channel 8 or the second sound output channel 9.

The present embodiment differs from the above embodiments in that: the channel device 16 in the present embodiment is fixed, and the rotatable component 14 of the housing 1 is rotatable relative to the channel device 16. By rotation of the rotatable component 14, the through-hole 6 of the rotatable component 14 may be connected to the first sound output channel 8 or the second sound output channel 9 so as to output the sound.

In an embodiment, as shown in Fig. 8, in the case of playing the sound loudly, if the direction of the second sound output outlet 5 is opposite to the direction of the second sound output channel 9, the through-hole 6 rotates to the second sound output channel 9 to open the second sound output channel 9 and at the same time block the first sound output channel 8, so that the mobile terminal 100 outputs the sound through both the second speaker and the through-hole 6. The second speaker and the through-hole 6 respectively serve as the left sound channel and the right sound channel, so as to achieve relatively good stereo-playing effect by using opposite sound-outputting directions. Alternatively, as shown in Fig. 10, in the case of playing the sound loudly, if the direction of the second sound output outlet 5 is opposite to the direction of the first sound output channel 8, the through-hole 6 rotates to the first sound output channel 8 to open the first sound output channel 8 and at the same time block the second sound output channel 9, so that the mobile terminal 100 outputs the sound through both the second speaker and the through-hole 6. The second speaker and the through-hole 6 respectively serve as the left sound channel and the right sound channel, so as to achieve relatively good stereo-playing effect by using opposite sound-outputting directions. In the case of listening to the private call or listening to the private audio message, as shown in Fig. 9, with the rotation of the rotatable component 14, the through-hole 6 rotates to the first sound output channel 8 to open the first sound output channel 8 and at the same time block the second sound output channel 9, so that the mobile terminal 100 outputs the sound through the first sound output channel 8 and the through-hole 6. The mobile terminal outputs the sound through the through-hole 6, and the second speaker does not output the sound.

The present invention further provides a sound output control method of the mobile terminal.

In an eighth embodiment of the present invention, as shown in Fig. 10, the method is applied to the mobile terminal as described in the seventh embodiment. The sound output control method of the mobile terminal includes the following steps. At step a1, a playing state of the mobile terminal is detected. In the present embodiment, the playing state of the mobile terminal includes a first playing state and a second playing state. The first playing state is a playing scenario in which personal privacy needs to be protected set by an operation and maintenance personnel or a user according to needs, for example, listening to the private call, listening to the private audio message, and so on. The second playing state is a playing scenario in which the sound is played loudly set by an operation and maintenance personnel or a user according to needs, for example, playing a video without using an earphone, playing music without using the earphone, and so on. There are two ways to determine the playing state of the mobile terminal. A first way is that the mobile terminal automatically determines the playing state based on the current playing scenario. That is, when the mobile terminal detects the current playing scenario, the mobile terminal acquires the corresponding playing state based on the current playing scenario. The other way is that an operation and maintenance personnel or a user sends a playing state setting instruction to the mobile terminal according to needs, and the mobile terminal determines the playing state based on playing state information carried by the instruction.

At step a2, when the playing state of the mobile terminal is the first playing state, it is controlled that the first sound output outlet is connected to the through-hole through the first sound output channel and the first sound output outlet is not connected to the through-hole, so as to enable the mobile terminal to output the sound through the through-hole. When the mobile terminal determines that the playing state is the first playing state, the rotatable component is controlled to rotate to a position where the through-hole is connected to the first sound output channel. At this time, the first sound output outlet is connected to the through-hole through the first sound output channel, and the second sound output channel is not connected to the through-hole. The mobile terminal outputs the sound through the first sound output outlet of the first speaker, and the sound is transmitted through the first sound output channel and is output from the through-hole. The second speaker does not output the sound.

At step a3, when the playing state of the mobile terminal is the second playing state, it is controlled that the first sound output outlet is connected to the through-hole through the second sound output channel and the first sound output outlet is not connected to the through-hole, so as to enable the mobile terminal to output the sound through the through-hole and the second sound output outlet. The direction of the second sound output outlet is opposite to the direction of the second sound output channel.

When the mobile terminal determines that the playing state is the second playing state, the rotatable component is controlled to rotate to a position where the through-hole is connected to the second sound output channel. At this time, the first sound output outlet is connected to the through-hole through the second sound output channel, and the first sound output channel is not connected to the through-hole. The mobile terminal outputs the sound through the first sound output outlet of the first speaker, and the sound is transmitted through the second sound output channel and is output from the through-hole. At the same time, the second speaker outputs the sound through the second sound output outlet, the direction of which is opposite to the direction of the second sound output channel. In this way, relatively good stereo-playing effect is achieved by using opposite sound-outputting directions, and acoustic experience of the user is improved.

In the technical solutions of the present invention, the mobile terminal include: a housing, a first speaker, a second speaker, and a sound output channel switching device. A first sound output hole and a second sound output hole are provided on two side surfaces respectively. The sound output channel switching device is further provided with a sound output channel. The first speaker may be connected to the first sound output hole or the second sound output hole through the sound output channel. The sound is output through both the sound output hole of the first speaker and the second speaker. The direction of the second speaker is opposite to the sound output hole of the first speaker. Relatively good stereo-playing effect is achieved by using opposite sound-outputting directions, and acoustic experience of the user is improved.

The above description only involves embodiments of the present invention, and does not limit the patent scope of the present invention thereby.

## Claims

1. A mobile terminal (100), comprising:
a housing (1), a first side surface of the housing being provided with a first sound output hole (2) and a second side surface of the housing (1) being provided with a second sound output hole (3);
a first speaker, the first speaker being provided in the housing (1) and comprising a first sound output outlet (4);
a sound output channel switching device (15), a sound output channel (7) being formed in the sound output channel switching device (15), the first sound output outlet (4) being connected to the first sound output hole (2) or the second sound output hole (3) through the sound output channel (7); and
a second speaker, the second speaker being provided in the housing (1) and comprising a second sound output outlet (5), a direction of the second sound output outlet (5) being opposite to a direction of the first sound output hole (2) or the second sound output hole (3);
**characterized in that**:
the sound output channel switching device (15) is provided in the housing (1) and is rotatable relative to the housing (1), so as to enable the sound output channel (7) to communicate the first sound output outlet (4) and the first sound output hole (2) or enable the sound output channel (7) to communicate the first sound output outlet (4) and the second sound output hole (3).

2. The mobile terminal (100) according to claim 1, wherein the first side surface is a display surface (10) of the mobile terminal (100), and the second side surface is a top end surface (11) of the mobile terminal (100).

3. The mobile terminal (100) according to claim 2, wherein the first sound output hole (2) is provided with a first switch, and the second sound output hole (3) is provided with a second switch,
when the first switch opens the first sound output hole (2), the second switch closes the second sound output hole (3), and when the first switch closes the first sound output hole (2), the second switch opens the second sound output hole (3); or
the first sound output hole (2) and the second sound output hole (3) share a switch (13), when the switch opens the first sound output hole (2), the switch closes the second sound output hole (3), and when the switch opens the second sound output hole (3), the switch closes the first sound output hole (2).

4. The mobile terminal (100) according to claim 1, wherein the sound output channel (7) comprises a first sound output channel (8) and a second sound output channel (9), when an exit of the first sound output channel (8) rotates to the first sound output hole (2), the first sound output hole (2) is connected to the first sound output channel (8) and the second sound output hole (3) is blocked from the second sound output channel (9); and
when an exit of the second sound output channel (9) rotates to the second sound output hole (3), the second sound output hole (3) is connected to the second sound output channel (9) and the first sound output hole (2) is blocked from the first sound output channel (8).

5. The mobile terminal (100) according to claim 1, wherein the first side surface is a display surface (10) of the mobile terminal (100), and the second side surface is a back surface of the mobile terminal (100).

6. A sound output control method of the mobile terminal (100), applied to the mobile terminal (100) according to any one of claims 1 to 5, comprising:
detecting a playing state of the mobile terminal (100);
controlling, when the playing state of the mobile terminal (100) is a first playing state, that the first sound output outlet (4) is connected to the first sound output hole (2) and the first sound output outlet (4) is not connected to the second sound output hole (3), so as to enable the mobile terminal (100) to output a sound through the first sound output hole (2); and
controlling, when the playing state of the mobile terminal (100) is a second playing state, that the first sound output outlet (4) is connected to the second sound output hole (3) and the first sound output outlet (4) is not connected to the first sound output hole (2), so as to enable the mobile terminal (100) to output a sound through the second sound output hole (3) and the second sound output outlet (5), wherein the direction of the second sound output outlet (5) is opposite to the direction of the second sound output hole (3).

7. A mobile terminal (100), comprising:
a housing (1), comprising a rotatable component (14) that is provided with a through-hole, at least one side surface of the rotatable component (14) is an arc surface;
a first speaker, provided in the housing (10) and comprising a first sound output outlet (4);
a second speaker, provided in the housing (10) and comprising a second sound output outlet (5), a direction of the second sound output outlet (5) is opposite to a direction of a first sound output channel (8) or a second sound output channel (9);
a channel device (16), provided in the rotatable component (14) and fitting with the arc surface, the first sound output channel (8) and the second sound output channel (9) are provided in the channel device (16), an exit of the first sound output channel (8) faces a first side surface of the mobile terminal (100), and an exit of the second sound output channel (9) faces a second side surface of the mobile terminal (100), the first sound output outlet (4) is connected to the first sound output channel (8) and the second sound output channel (9) respectively; and
**characterized in that**:
the rotatable component (14) is rotatable relative to the first sound output channel (8) and the second sound output channel (9), when the through-hole of the rotatable component (14) rotates to the exit of the first sound output channel (8), the first sound output channel (8) is connected to the through-hole and the second sound output channel (9) is blocked; and when the through-hole of the rotatable component (14) rotates to the exit of the second sound output channel (9), the second sound output channel (9) is connected to the through-hole and the first sound output channel (8) is blocked.

8. A sound output control method of the mobile terminal (100), applied to the mobile terminal (100) according to claim 7, comprising:
detecting a playing state of the mobile terminal (100);
controlling, when the playing state of the mobile terminal (100) is a first playing state, that the first sound output outlet (4) is connected to the through-hole through the first sound output channel (8) and the second sound output channel (9) is not connected to the through-hole, so as to enable the mobile terminal (100) to output a sound through the through-hole; and
controlling, when the playing state of the mobile terminal (100) is a second playing state, that the first sound output outlet (4) is connected to the through-hole through the second sound output channel (9) and the first sound output channel (8) is not connected to the through-hole, so as to enable the mobile terminal (100) to output a sound through the through-hole and the second sound output outlet (5), wherein the direction of the second sound output outlet (5) is opposite to the direction of the second sound output channel (9).

## Patentansprüche

1. Mobiles Endgerät (100), umfassend:
ein Gehäuse (1), wobei eine erste Seitenfläche des Gehäuses mit einem ersten Tonausgabeloch (2) versehen ist und eine zweite Seitenfläche des Gehäuses (1) mit einem zweiten Tonausgabeloch (3) versehen ist;
einen ersten Lautsprecher, wobei der erste Lautsprecher in dem Gehäuse (1) bereitgestellt ist und einen ersten Tonausgabeauslass (4) umfasst;
eine Tonausgabekanal-Umschaltvorrichtung (15), wobei ein Tonausgabekanal (7) in der Tonausgabekanal-Umschaltvorrichtung (15) gebildet ist, wobei der erste Tonausgabeauslass (4) über den Tonausgabekanal (7) mit dem ersten Tonausgabeloch (2) oder dem zweiten Tonausgabeloch (3) verbunden ist; und
einen zweiten Lautsprecher, wobei der zweite Lautsprecher in dem Gehäuse (1) bereitgestellt ist und einen zweiten Tonausgabeauslass (5) umfasst, wobei eine Richtung des zweiten Tonausgabeauslasses (5) einer Richtung des ersten Tonausgabelochs (2) oder des zweiten Tonausgabelochs (3) entgegengesetzt ist;
**dadurch gekennzeichnet, dass**:
die Tonausgabekanal-Umschaltvorrichtung (15) in dem Gehäuse (1) bereitgestellt ist und relativ zu dem Gehäuse (1) drehbar ist, um es zu ermöglichen, dass der Tonausgabekanal (7) den ersten Tonausgabeauslass (4) mit dem ersten Tonausgabeloch (2) in Verbindung setzt, oder um es zu ermöglichen, dass der Tonausgabekanal (7) den ersten Tonausgabeauslass (4) mit dem zweiten Tonausgabeloch (3) in Verbindung setzt.

2. Mobiles Endgerät (100) nach Anspruch 1, wobei die erste Seitenfläche eine Anzeigefläche (10) des mobilen Endgerätes (100) ist und die zweite Seitenfläche eine obere Endfläche (11) des mobilen Endgerätes (100) ist.

3. Mobiles Endgerät (100) nach Anspruch 2, wobei das erste Tonausgabeloch (2) mit einem ersten Schalter versehen ist und das zweite Tonausgabeloch (3) mit einem zweiten Schalter versehen ist,
wenn der erste Schalter das erste Tonausgabeloch (2) öffnet, der zweite Schalter das zweite Tonausgabeloch (3) schließt, und wenn der erste Schalter das erste Tonausgabeloch (2) schließt, der zweite Schalter das zweite Tonausgabeloch (3) öffnet; oder
das erste Tonausgabeloch (2) und das zweite Tonausgabeloch (3) einen Schalter (13) gemeinsam nutzen, wenn der Schalter das erste Tonausgabeloch (2) öffnet, der Schalter das zweite Tonausgabeloch (3) schließt, und wenn der Schalter das zweite Tonausgabeloch (3) öffnet, der Schalter das erste Tonausgabeloch (2) schließt.

4. Mobiles Endgerät (100) nach Anspruch 1, wobei der Tonausgabekanal (7) einen ersten Tonausgabekanal (8) und einen zweiten Tonausgabekanal (9) umfasst, wenn sich ein Ausgang des ersten Tonausgabekanals (8) zu dem ersten Tonausgabeloch (2) dreht, das erste Tonausgabeloch (2) mit dem ersten Tonausgabekanal (8) verbunden ist und das zweite Tonausgabeloch (3) von dem zweiten Tonausgabekanal (9) blockiert ist; und
wenn sich ein Auslass des zweiten Tonausgabekanals (9) zu dem zweiten Tonausgabeloch (3) dreht, das zweite Tonausgabeloch (3) mit dem zweiten Tonausgabekanal (9) verbunden ist und das erste Tonausgabeloch (2) von dem ersten Tonausgabekanal (8) blockiert ist.

5. Mobiles Endgerät (100) nach Anspruch 1, wobei die erste Seitenfläche eine Anzeigefläche (10) des mobilen Endgerätes (100) ist und die zweite Seitenfläche eine Rückseite des mobilen Endgerätes (100) ist.

6. Tonausgabe-Steuerungsverfahren des mobilen Endgerätes (100), das auf das mobile Endgerät (100) nach einem der Ansprüche 1 bis 5 angewendet wird, umfassend:
Detektieren eines Wiedergabezustands des mobilen Endgerätes (100);
Steuern, wenn der Wiedergabezustand des mobilen Endgerätes (100) ein erster Wiedergabezustand ist, dass der erste Tonausgabeauslass (4) mit dem ersten Tonausgabeloch (2) verbunden wird und der erste Tonausgabeauslass (4) nicht mit dem zweiten Tonausgabeloch (3) verbunden wird, um es dem mobilen Endgerät (100) zu ermöglichen, einen Ton über das erste Tonausgabeloch (2) auszugeben; und
Steuern, wenn der Wiedergabezustand des mobilen Endgerätes (100) ein zweiter Wiedergabezustand ist, dass der erste Tonausgabeauslass (4) mit dem zweiten Tonausgabeloch (3) verbunden wird und der erste Tonausgabeauslass (4) nicht mit dem ersten Tonausgabeloch (2) verbunden wird, um es dem mobilen Endgerät (100) zu ermöglichen, einen Ton über das zweite Tonausgabeloch (3) und den zweiten Tonausgabeauslass (5) auszugeben, wobei die Richtung des zweiten Tonausgabeauslasses (5) der Richtung des zweiten Tonausgabelochs (3) entgegengesetzt ist.

7. Mobiles Endgerät (100), umfassend:
ein Gehäuse (1), umfassend eine drehbare Komponente (14), die mit einem Durchgangsloch versehen ist, wobei mindestens eine Seitenfläche der drehbaren Komponente (14) eine Bogenfläche ist;
einen ersten Lautsprecher, der in dem Gehäuse (10) bereitgestellt ist und einen ersten Tonausgabeauslass (4) umfasst;
einen zweiten Lautsprecher, der in dem Gehäuse (10) bereitgestellt ist und einen zweiten Tonausgabeauslass (5) umfasst, wobei eine Richtung des zweiten Tonausgabeauslasses (5) einer Richtung eines ersten Tonausgabekanals (8) oder eines zweiten Tonausgabekanals (9) entgegengesetzt ist;
eine Kanalvorrichtung (16), die in der drehbaren Komponente (14) bereitgestellt ist und mit der Bogenfläche zusammenpasst, wobei der erste Tonausgabekanal (8) und der zweite Tonausgabekanal (9) in der Kanalvorrichtung (16) bereitgestellt sind, ein Ausgang des ersten Tonausgabekanals (8) einer ersten Seitenfläche des mobilen Endgerätes (100) zugewandt ist und ein Ausgang des zweiten Tonausgabekanals (9) einer zweiten Seitenfläche des mobilen Endgerätes (100) zugewandt ist, der erste Tonausgabeauslass (4) mit dem ersten Tonausgabekanal (8) bzw. dem zweiten Tonausgabekanal (9) verbunden ist; und
**dadurch gekennzeichnet, dass**:
die drehbare Komponente (14) relativ zu dem ersten Tonausgabekanal (8) und dem zweiten Tonausgabekanal (9) drehbar ist, wenn sich das Durchgangsloch der drehbaren Komponente (14) zu dem Ausgang des ersten Tonausgabekanals (8) dreht, der erste Tonausgabekanal (8) mit dem Durchgangsloch verbunden ist und der zweite Tonausgabekanal (9) blockiert ist; und wenn sich das Durchgangsloch der drehbaren Komponente (14) zu dem Ausgang des zweiten Tonausgabekanals (9) dreht, der zweite Tonausgabekanal (9) mit dem Durchgangsloch verbunden ist und der erste Tonausgabekanal (8) blockiert ist.

8. Tonausgabe-Steuerungsverfahren des mobilen Endgerätes (100), das auf das mobile Endgerät (100) nach Anspruch 7 angewendet wird, umfassend:
Detektieren eines Wiedergabezustands des mobilen Endgerätes (100);
Steuern, wenn der Wiedergabezustand des mobilen Endgerätes (100) ein erster Wiedergabezustand ist, dass der erste Tonausgabeauslass (4) über den ersten Tonausgabekanal (8) mit dem Durchgangsloch verbunden wird und der zweite Tonausgabekanal (9) nicht mit dem Durchgangsloch verbunden wird, um es dem mobilen Endgerät (100) zu ermöglichen, einen Ton über das Durchgangsloch auszugeben; und
Steuern, wenn der Wiedergabezustand des mobilen Endgerätes (100) ein zweiter Wiedergabezustand ist, dass der erste Tonausgabeauslass (4) über den zweiten Tonausgabekanal (9) mit dem Durchgangsloch verbunden wird und der erste Tonausgabekanal (8) nicht mit dem Durchgangsloch verbunden wird, um es dem mobilen Endgerät (100) zu ermöglichen, einen Ton über das Durchgangsloch und den zweiten Tonausgabeauslass (5) auszugeben, wobei die Richtung des zweiten Tonausgabeauslasses (5) der Richtung des zweiten Tonausgabekanals (9) entgegengesetzt ist.

## Revendications

1. Terminal mobile (100), comprenant :
un boîtier (1), une première surface latérale du boîtier étant dotée d'un premier trou d'émission de son (2) et une seconde surface latérale du boîtier (1) étant dotée d'un second trou d'émission de son (3) ;
un premier haut-parleur, le premier haut-parleur étant disposé dans le boîtier (1) et comprenant une première sortie d'émission de son (4) ;
un dispositif de commutation (15) de canal d'émission de son, un canal d'émission de son (7) étant formé dans le dispositif de commutation (15) de canal d'émission de son,
la première sortie d'émission de son (4) étant connectée au premier trou d'émission de son (2) ou au second trou d'émission de son (3) par l'intermédiaire du canal d'émission de son (7) ; et
un second haut-parleur, le second haut-parleur étant disposé dans le boîtier (1) et comprenant une seconde sortie d'émission de son (5), une direction de la seconde sortie d'émission de son (5) étant opposée à une direction du premier trou d'émission de son (2) ou du second trou d'émission de son (3) ;
**caractérisé en ce que** :
le dispositif de commutation (15) de canal d'émission de son est disposé dans le boîtier (1) et est rotatif par rapport au boîtier (1), afin de permettre au canal d'émission de son (7) de faire communiquer la première sortie d'émission de son (4) et le premier trou d'émission de son (2) ou de permettre au canal d'émission de son (7) de faire communiquer la première sortie d'émission de son (4) et le second trou d'émission de son (3).

2. Terminal mobile (100) selon la revendication 1, dans lequel la première surface latérale est une surface d'affichage (10) du terminal mobile (100), et la seconde surface latérale est une surface d'extrémité supérieure (11) du terminal mobile (100).

3. Terminal mobile (100) selon la revendication 2, dans lequel le premier trou d'émission de son (2) est doté d'un premier commutateur, et le second trou d'émission de son (3) est doté d'un second commutateur,
lorsque le premier commutateur ouvre le premier trou d'émission de son (2), le second commutateur ferme le second trou d'émission de son (3), et lorsque le premier commutateur ferme le premier trou d'émission de son (2), le second commutateur ouvre le second trou d'émission de son (3) ; ou
le premier trou d'émission de son (2) et le second trou d'émission de son (3) partagent un commutateur (13), lorsque le commutateur ouvre le premier trou d'émission de son (2), le commutateur ferme le second trou d'émission de son (3), et lorsque le commutateur ouvre le second trou d'émission de son (3), le commutateur ferme le premier trou d'émission de son (2).

4. Terminal mobile (100) selon la revendication 1, dans lequel le canal d'émission de son (7) comprend un premier canal d'émission de son (8) et un second canal d'émission de son (9), lorsqu'une sortie du premier canal d'émission de son (8) tourne vers le premier trou d'émission de son (2), le premier trou d'émission de son (2) est connecté au premier canal d'émission de son (8) et le second trou d'émission de son (3) n'a pas accès au second canal d'émission de son (9) ; et
lorsqu'une sortie du second canal d'émission de son (9) tourne vers le second trou d'émission de son (3), le second trou d'émission de son (3) est connecté au second canal d'émission de son (9) et le premier trou d'émission de son (2) n'a pas accès au premier canal d'émission de son (8).

5. Terminal mobile (100) selon la revendication 1, dans lequel la première surface latérale est une surface d'affichage (10) du terminal mobile (100), et la seconde surface latérale est une surface arrière du terminal mobile (100).

6. Procédé de commande d'émission de son du terminal mobile (100), appliqué au terminal mobile (100) selon l'une quelconque des revendications 1 à 5, comprenant :
la détection d'un état de lecture du terminal mobile (100) ; la vérification, lorsque l'état de lecture du terminal mobile (100) est un premier état de lecture, que la première sortie d'émission de son (4) est connectée au premier trou d'émission de son (2) et que la première sortie d'émission de son (4) n'est pas connectée au second trou d'émission de son (3), afin de permettre au terminal mobile (100) d'émettre un son à travers le premier trou d'émission de son (2) ; et
la vérification, lorsque l'état de lecture du terminal mobile (100) est un second état de lecture, que la première sortie d'émission de son (4) est connectée au second trou d'émission de son (3) et que la première sortie d'émission de son (4) n'est pas connectée au premier trou d'émission de son (2), afin de permettre au terminal mobile (100) d'émettre un son à travers le second trou d'émission de son (3) et la seconde sortie d'émission de son (5), dans lequel la direction de la seconde sortie d'émission de son (5) est opposée à la direction du second trou d'émission de son (3).

7. Terminal mobile (100), comprenant :
un boîtier (1), comprenant un composant rotatif (14) qui est doté d'un trou traversant, au moins une surface latérale du composant rotatif (14) est une surface arquée ; un premier haut-parleur, disposé dans le boîtier (10) et comprenant une première sortie d'émission de son (4) ;
un second haut-parleur, disposé dans le boîtier (10) et comprenant une seconde sortie d'émission de son (5), une direction de la seconde sortie d'émission de son (5) est opposée à une direction d'un premier canal d'émission de son (8) ou d'un second canal d'émission de son (9) ;
un dispositif à canaux (16), disposé dans le composant rotatif (14) et épousant la surface arquée, le premier canal d'émission de son (8) et le second canal d'émission de son (9) sont disposés dans le dispositif à canaux (16), une sortie du premier canal d'émission de son (8) fait face à une première surface latérale du terminal mobile (100), et une sortie du second canal d'émission de son (9) fait face à une seconde surface latérale du terminal mobile (100), la première sortie d'émission de son (4) est connectée au premier canal d'émission de son (8) et au second canal d'émission de son (9), respectivement ; et **caractérisé en ce que** :
le composant rotatif (14) est rotatif par rapport au premier canal d'émission de son (8) et au second canal d'émission de son (9), lorsque le trou traversant du composant rotatif (14) tourne vers la sortie du premier canal d'émission de son (8), le premier canal d'émission de son (8) est connecté au trou traversant et le second canal d'émission de son (9) est bloqué ; et lorsque le trou traversant du composant rotatif (14) tourne vers la sortie du second canal d'émission de son (9), le second canal d'émission de son (9) est connecté au trou traversant et le premier canal d'émission de son (8) est bloqué.

8. Procédé de commande d'émission de son du terminal mobile (100), appliqué au terminal mobile (100) selon la revendication 7, comprenant :
la détection d'un état de lecture du terminal mobile (100) ; la vérification, lorsque l'état de lecture du terminal mobile (100) est un premier état de lecture, que la première sortie d'émission de son (4) est connectée au trou traversant par l'intermédiaire du premier canal d'émission de son (8) et que le second canal d'émission de son (9) n'est pas connecté au trou traversant, afin de permettre au terminal mobile (100) d'émettre un son à travers le trou traversant ; et
la vérification, lorsque l'état de lecture du terminal mobile (100) est un second état de lecture, que la première sortie d'émission de son (4) est connectée au trou traversant par l'intermédiaire du second canal d'émission de son (9) et que le premier canal d'émission de son (8) n'est pas connecté au trou traversant, de sorte à permettre au terminal mobile (100) d'émettre un son à travers le trou traversant et la seconde sortie d'émission de son (5), dans lequel la direction de la seconde sortie d'émission de son (5) est opposée à la direction du second canal d'émission de son (9).
